# EUROPEAN PATENT APPLICATION

(11) **EP 4 831 138 A1**
(43) Date of publication of application: **28.10.2026**
(21) Application number: 25745363.9
(22) Date of filing: 23.01.2025
(51) Int. Cl.: C03C 8/08, C03C 8/20, H05B 6/12, H05B 6/64

(54) **ENAMEL COMPOSITION, PREPARATION METHOD THEREFOR, AND COOKING APPLIANCE**

(30) Priority: 23.01.2024 KR 20240010259
(71) Applicant: LG Electronics Inc., Yeongdeungpo-gu Seoul 07336 (KR)
(72) Inventor: JANG, Eunjin, Seoul 07796 (KR); JUN, Hyunwoo, Seoul 07796 (KR); KIM, Taeho, Seoul 07796 (KR); KIM, Taehee, Seoul 07796 (KR)
(74) Representative: Ter Meer und Partner mbB
(86) International application number: PCT/KR2025/001342
(87) International publication number: WO 2025/159539

(57) **Abstract**

The present invention relates to an enamel composition, a preparation method therefor, and a cooking appliance. The enamel composition according to the present invention comprises: 20-30 wt% of P₂O₅, 16-23 wt% of SiO₂, 14-20 wt% of Al₂O₃, 10-16 wt% of B₂O₃, 15-30 wt% of at least one of Na₂O, K₂O, and Li₂O, 0.5-4 wt% of TiO₂, 2-8 wt% of Fe₂O₃, 1-2 wt% of Co₃O₄, and 0.5-8 wt% of MeO, and thus can lower the temperature for heating required for cleaning existing enamel coatings and significantly reduce the heating time, and enables cleaning without soaking using water.

## Description

### [Technical Field]

The present invention relates to a novel enamel composition capable of reducing a heating temperature required for cleaning a coating layer and shortening a heating time required for cleaning the coating layer, a preparation method therefor, and a cooking appliance.

### [Background Art]

Enamel is a vitreous glaze coated on the surface of a metal substrate. Enamel is commonly used in cooking appliances such as microwave ovens and ovens. The cooking appliances, such as electric ovens and gas ovens, are devices that cook food using a heat source. Contaminants generated during cooking adhere to the inner wall of the cavity of the cooking appliance, thereby necessitating cleaning of the inner wall of the cavity. The enamel is coated on, for example, the surface of the inner wall of the cavity of the cooking appliance to facilitate removal of contaminants adhering to the cooking appliance. In general, a pyrolysis method, in which contaminants are burned to ash at a high temperature, is known as a technique for facilitating cleaning of the inner wall of the cavity, and as an enamel composition applicable to the pyrolysis method, an enamel composition containing components such as P₂O₅, SiO₂, and B₂O₃ are known.

However, the conventionally known enamel compositions require heating at a high pyrolysis temperature of about 450 to 500 °C for about 3 to 5 hours to achieve cleaning, resulting in high energy consumption.

In addition, the conventional enamel compositions require a soaking process in the presence of water for a certain time to remove oily contaminants, such as beef fat, pork fat, and poultry fat, thereby making the cleaning process cumbersome.

In addition, the enamel compositions should not undergo deformation or damage even at high temperatures of 450 to 500 °C, and the conventional enamel compositions suffer from deteriorated durability under such high-temperature conditions.

### [Disclosure]

### [Technical Problem]

The present invention is directed to providing a novel enamel composition capable of reducing a temperature required for cleaning an enamel coating layer and shortening a required heating time.

In addition, the present invention is directed to providing a novel enamel composition that does not require soaking in water to remove oily contaminants.

In addition, the present invention is directed to providing a novel enamel composition that offers excellent durability, such as heat resistance and chemical resistance, in addition to excellent cleaning performance.

### [Technical Solution]

The present invention provides an enamel composition capable of reducing the temperature required for cleaning a conventional enamel coating layer, shortening the required heating time, and enabling oily contaminants to be removed at room temperature without soaking in water. To this end, the enamel composition according to the present invention increases the solid solubility limit of catalytic metal oxides through a composition design of the matrix components.

Specifically, an enamel composition of the present invention includes 20 to 30 wt% of P₂O₅, 16 to 23 wt% of SiO₂, 14 to 20 wt% of Al₂O₃, 10 to 16 wt% of B₂O₃, 15 to 30 wt% of one or more selected from the group consisting of Na₂O, K₂O, and Li₂O, 0.5 to 4 wt% of TiO₂, 2 to 8 wt% of Fe₂O₃, 1 to 2 wt% of Co₃O₄, and 0.5 to 8 wt% of MeO.

Here, MeO includes one or more selected from the group consisting of Cu₂O, CeO₂, Bi₂O₃, Y₂O₃, La₂O₃, Ta₂O₅, V₂O₅, WO₃, MoO₃, and MnO₄.

Preferably, the enamel composition of the present invention may further include 2.5 wt% or less of ZrO₂ and 2 wt% or less of AlF.

In addition, MeO may include 6 wt% or more of Cu₂O or MnO₄.

### [Advantageous Effects]

An enamel composition according to the present invention can reduce a heating temperature required for cleaning a conventional enamel coating layer and significantly shorten a required heating time. Accordingly, the enamel composition according to the present invention can reduce the heating temperature required for cleaning and shorten the required heating time, thereby reducing energy consumption during cleaning.

In addition, the enamel composition according to the present invention enables cleaning of oily contaminants at room temperature without requiring soaking in water. Accordingly, a user can conveniently clean the cooking appliance. In addition, the enamel composition according to the present invention can improve the hygiene of the cooking appliance.

Moreover, the enamel composition according to the present invention increases the solid solubility limit of catalytic metal oxides through an optimized phosphate-based composition design. Accordingly, the enamel composition according to the present invention exhibits not only excellent cleaning performance but also excellent durability, such as heat resistance and chemical resistance.

### [Description of Drawings]

FIG. 1 is a front view showing a cooking appliance according to an embodiment of the present invention.
FIG. 2 is an enlarged cross-sectional view of a portion of the inner surface of a cavity of the cooking appliance according to FIG. 1.
FIG. 3 is an enlarged cross-sectional view of a portion of the inner surface of a door of the cooking appliance according to FIG. 1.
FIG. 4 is a photograph showing the surfaces of enamel coatings according to examples and a comparative example.

### [Detailed description of the invention]

The above-described objects, features, and advantages will be described below in detail, and thus those skilled in the art to which the present invention pertains will be able to easily carry out the technical spirit of the present invention. In describing the present invention, when it is determined that a detailed description of the known technology related to the present invention may unnecessarily obscure the gist of the present invention, a detailed description thereof will be omitted. Hereinafter, exemplary embodiments according to the present invention will be described in detail.

The present invention is not limited to embodiments to be disclosed below but may be implemented in various different forms, these embodiments are merely provided to make the disclosure of the present invention complete and fully inform those skilled in the art of the scope of the invention. Hereinafter, an enamel composition, a preparation method therefor, and a cooking appliance according to the present invention will be described in detail.

### <Enamel composition>

An enamel composition according to the present invention includes 20 to 30 wt% of P₂O₅, 16 to 23 wt% of SiO₂, 14 to 20 wt% of Al₂O₃, 10 to 16 wt% of B₂O₃, 15 to 30 wt% of one or more selected from the group consisting of Na₂O, K₂O, and Li₂O, 0.5 to 4 wt% of TiO₂, 2 to 8 wt% of Fe₂O₃, 1 to 2 wt% of Co₃O₄, and 0.5 to 8 wt% of MeO.

P₂O₅ is a component that functions to form an alkali phosphate glass structure. P₂O₅ is also a glass former that facilitates the incorporation of a large amount of transition metal oxides into the enamel composition, and facilitates penetration of water between the enamel surface and contaminants, thereby allowing the contaminants to be removed more easily. P₂O₅ is included in an amount of 20 to 30 wt%. When the content of P₂O₅ exceeds 30 wt%, vitrification of the enamel composition may become difficult, and the thermal properties of the enamel composition can be degraded. When the content of P₂O₅ is less than 20 wt%, the amount of transition metal oxides that may be incorporated may be reduced, thereby degrading cleaning performance. More preferably, the enamel composition according to the present invention includes 21 to 29 wt% of P₂O₅.

SiO₂ is a glass-forming component that reinforces the framework of a glass structure to improve the chemical resistance of the enamel composition and facilitates the expression of the catalytic properties of metal oxides. Since catalytic metal oxides are inferior in heat resistance and chemical resistance to other components, they cannot generally be incorporated in large amounts into an enamel composition. However, since SiO₂ has a structure with relatively large pore sizes, inclusion of an appropriate amount of SiO₂ in the glass composition may increase the solubility of catalytic metal oxides in the glass. Accordingly, by appropriately controlling the content ratio of SiO₂ to the catalytic metal oxides, both excellent heat resistance and chemical resistance can be achieved while maintaining the catalytic characteristics of the metal oxides. SiO₂ is included in the enamel composition in an amount of 16 to 23 wt%. When the content of SiO₂ exceeds 23 wt%, incorporation of other components can be hindered, thereby degrading cleaning performance. When the content of SiO₂ is less than 16 wt%, the glass composition according to the present invention may collapse. More preferably, the enamel composition according to the present invention includes 16 to 20 wt% of SiO₂.

B₂O₃ serves as a glass former, and is a component that functions to uniformly melt the respective components of the enamel composition. In addition, B₂O₃ functions to improve coating performance by controlling a coefficient of thermal expansion and fusion flow of the enamel composition. In addition, B₂O₃ maintains an appropriate viscosity during a firing process of the enamel and suppresses crystallization of the glass composition. B₂O₃ is included in the enamel composition in an amount of 10 to 16 wt%. When the content of B₂O₃ exceeds 16 wt%, incorporation of other components can be hindered, thereby degrading cleaning performance. When the content of B₂O₃ is less than 10 wt%, the glass composition may collapse or crystallization of the glass composition may occur. More preferably, the enamel composition of the present invention includes 11 to 14 wt% of B₂O₃.

Li₂O, Na₂O, and K₂O function to improve the cleaning performance of the enamel composition. The enamel composition includes 15 to 30 wt% of one or more selected from the group consisting of Li₂O, Na₂O, and K₂O. When the total content of one or more selected from the group consisting of Li₂O, Na₂O, and K₂O exceeds 30 wt%, the coefficient of thermal expansion of the glass may increase excessively, thereby degrading coating performance. When the total content of one or more selected from the group consisting of Li₂O, Na₂O, and K₂O is less than 15 wt%, cleaning performance can be degraded.

Next, the enamel composition according to the present invention includes 14 to 20 wt% of Al₂O₃. Al₂O₃ compensates for the relatively poor durability of the alkali phosphate glass structure and improves the hardness of the enamel surface. When the content of Al₂O₃ exceeds 20 wt%, the melting temperature and fusion flow increase, thereby reducing the adhesion of the enamel coating layer. In addition, when the content of Al₂O₃ is less than 14 wt%, the durability of the enamel coating layer can be degraded.

In addition, the enamel composition according to the present invention includes 0.5 to 4 wt% of TiO₂. TiO₂ compensates for the relatively poor durability of the alkali phosphate glass structure and improves the hardness of the enamel surface. Accordingly, TiO₂ is included as an essential component in the enamel composition. When the content of TiO₂ exceeds 4 wt%, the melting temperature and fusion flow increase, thereby reducing the adhesion of the enamel coating layer. In addition, when the content of TiO₂ is less than 0.5 wt%, the durability of the enamel coating layer can be degraded.

In addition, the enamel composition of the present invention includes 2 to 8 wt% of Fe₂O₃ and 1 to 2 wt% of Co₃O₄. Fe₂O₃ and Co₃O₄ promote carbonization of contaminants adhered to the surface of the enamel coating layer and improve adhesion of the enamel coating layer. When the contents of Fe₂O₃ and Co₃O₄ are below the above-described lower limits, the cleaning performance and adhesion of the enamel coating layer can be degraded. Conversely, when the contents of Fe₂O₃ and Co₃O₄ exceed the above-described upper limits, the chemical durability of the glass structure can be degraded instead.

Next, the enamel composition of the present invention includes 0.5 to 8 wt% of MeO. Here, MeO refers to a metal oxide that functions as a catalyst in the enamel composition. MeO includes one or more selected from the group consisting of Cu₂O, CeO₂, Bi₂O₃, Y₂O₃, La₂O₃, Ta₂O₅, V₂O₅, WO₃, MoO₃, and MnO₄. When the content of MeO exceeds 8 wt%, incorporation of other components can be hindered, thereby degrading durability such as heat resistance and chemical resistance. On the other hand, when the content of MeO is less than 0.5 wt%, the carbonization performance for contaminants on the enamel coating layer and the cleaning performance can be degraded. More preferably, to improve both cleaning performance and durability, MeO may include 6 wt% or more of Cu₂O or MnO₄.

Meanwhile, the enamel composition of the present invention may include 2.5 wt% or less of ZrO₂ to increase the chemical durability and improve the adhesion of the enamel coating layer. In addition, the enamel composition of the present invention may further include 2 wt% or less of AlF to control the surface tension of the enamel coating layer and thereby improve the surface characteristics thereof.

As described above, conventional enamel compositions require heating at a high pyrolysis temperature of about 450 to 500 °C for about 3 to 5 hours for cleaning, resulting in high energy consumption. However, the enamel composition according to the present invention employs a newly designed matrix composition to increase the solid solubility limit of catalytic metal oxides. Accordingly, contaminants containing sugars can be removed even when heated at a temperature about 100 °C lower than the conventional pyrolysis temperature for less than about one hour. Accordingly, use of the enamel composition according to the present invention reduces energy consumption and shortens the cleaning time. In addition, the enamel composition according to the present invention provides the advantage of enabling oily contaminants to be removed immediately at room temperature without soaking in water, thereby facilitating hygienic maintenance of the cooking appliance.

### <Preparation method of enamel composition>

A preparation method of an enamel composition according to the present invention includes providing the above-described enamel composition material, melting the enamel composition material, and quenching the melted enamel composition material to form an enamel composition.

After the enamel composition material is sufficiently mixed, the enamel composition material is melted. Preferably, the enamel composition material is melted at a temperature of 1200 to 1400 °C. Preferably, the enamel composition material is melted for 1 to 2 hours.

Thereafter, the melted enamel composition material may be rapidly cooled by a quenching roller using, for example, a chiller. Accordingly, the enamel composition may be formed.

### <Cooking appliance>

Next, the enamel composition according to the present invention may be coated on one surface of an object to be coated. The object may be a metal plate, a glass plate, or a part or the entirety of a cooking appliance. Preferably, the enamel composition may be coated on an inner surface of a cavity or an inner surface of a door of the cooking appliance.

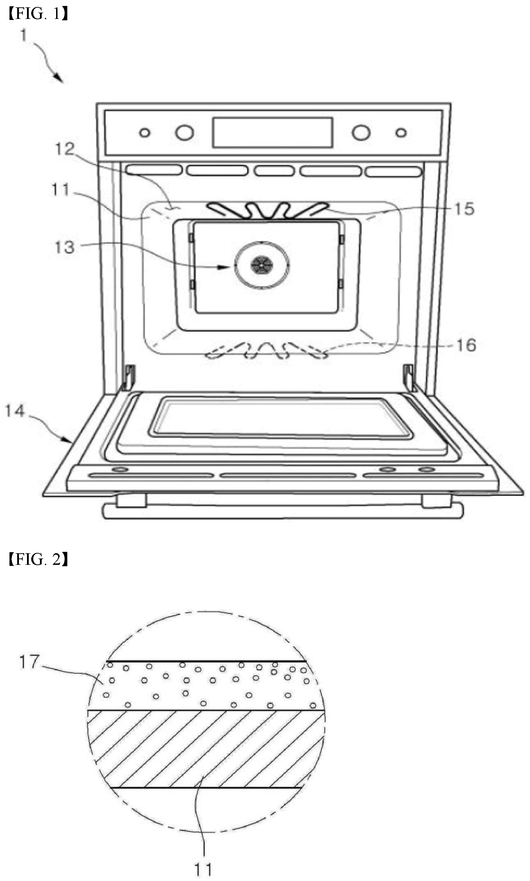

Referring to FIG. 1, a cooking appliance 1 according to the present invention includes a cavity 11 in which a cooking chamber is formed, a door 14 configured to selectively open and close the cooking chamber, at least one heat source 13, 15, and 16 configured to provide heat for heating food in the cooking chamber, and a coating layer formed of the enamel composition according to the present invention and coated on an inner surface of the cavity 11 or an inner surface of the door 14.

The cavity 11 may have a hexahedral shape with an open front surface. The heat sources 13, 15, and 16 may include a convection assembly 13 configured to discharge heated air into the cavity 11, an upper heater 15 disposed above the cavity 11, and a lower heater 16 disposed below the cavity 11. The upper heater 15 and the lower heater 16 may be disposed inside or outside the cavity 11. Of course, the heat sources 13, 15, and 16 are not necessarily limited to including the convection assembly 13, the upper heater 15, and the lower heater 16. That is, the heat sources 13, 15, and 16 may include one or more of the convection assembly 13, the upper heater 15, and the lower heater 16.

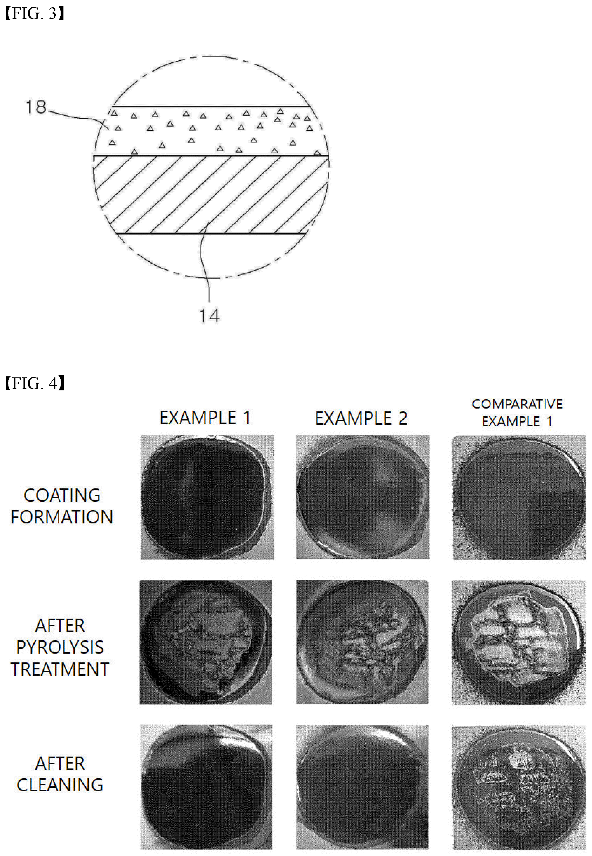

Meanwhile, referring to FIGS. 2 and 3, the enamel composition according to the present invention may be coated on the inner surface of the cavity 11 or the inner surface of the door 14 of the cooking appliance 1 by a dry process or a wet process. The cavity 11 and the door 14 may be formed of a metal plate, and the coating layers 17 and 18 formed using the enamel composition according to the present invention may be directly coated as a single layer on the metal plate.

In the dry process, the enamel composition materials may be dispersed in an organic binder, and the mixture of the enamel composition materials and the organic binder may be milled in a ball mill to prepare a glass frit. On the other hand, in the wet process, the enamel composition materials may be dispersed in water (H₂O) and a pigment, and the mixture of the enamel composition materials, water (H₂O), and the pigment may be milled in a ball mill to prepare a glass frit.

Thereafter, the glass frit prepared by the dry process or the wet process may be applied to the inner surface of the cavity 11 or the inner surface of the door 14 of the cooking appliance 1 by spray coating. The applied glass frit may be fired at a temperature of 600 to 900 °C for 100 to 450 seconds to form a coating on the inner surface of the cavity 11 or the inner surface of the door 14 of the cooking appliance 1,

Hereinafter, a specific aspect of the present invention will be described with reference to examples.

### <Examples>

### <Preparation of enamel composition>

Enamel compositions having compositional ratios shown in Table 1 were prepared. Raw materials for the respective components were sufficiently mixed for 3 hours using a V-mixer. Here, raw materials for Na₂O, K₂O, and Li₂O were Na₂CO₃, K₂CO₃, and Li₂CO₃, respectively, and the remaining raw materials corresponded to the components listed in Table 1. The mixed materials were sufficiently melted at 1300 °C for 1 hour and 30 minutes, rapidly cooled using a quenching roller, and thus, glass cullet was obtained.

The glass cullet obtained in the above process was first subjected to particle size adjustment using a ball mill and then pulverized using a jet mill for about 5 hours, and the pulverized material was passed through a 325-mesh sieve (ASTM C285-88). The particle size was controlled such that about 1 g to 3 g of frit remained on the sieve, and the powder passing through the sieve was used as the enamel composition frit.

**[Table 1]**

| Component (wt%) | Examples | | | | | Comparative Example | | |
|---|---|---|---|---|---|---|---|---|
| | 1 | 2 | 3 | 4 | 5 | 1 | 2 | 3 |
| P₂O₅ | 22.5 | 22.5 | 25 | 27 | 24 | 25.5 | 24 | 16 |
| SiO₂ | 16 | 16 | 18 | 18 | 19 | 15 | 15 | 15 |
| Al₂O₃ | 14 | 14 | 16 | 15 | 14 | 19.3 | 17 | 20 |
| ZrO₂ | 2 | 2 | 0 | 0 | 1 | 2.4 | 6 | 6 |
| Na₂O | 8 | 8 | 6 | 7 | 8 | 14.2 | 10 | 10 |
| K₂O | 10 | 10 | 8 | 10 | 9 | 10.1 | 5 | 5 |
| Li₂O | 0 | 0 | 2 | 0 | 1 | 2.85 | 0 | 0 |
| B₂O₃ | 12 | 12 | 11 | 11 | 10 | 5.5 | 2 | 2 |
| ZnO | 0 | 0 | 0 | 0 | 0 | 5.15 | 11 | 11 |
| TiO₂ | 2 | 2 | 1 | 1.5 | 0.5 | 0 | 0 | 0 |
| Fe₂O₃ | 5 | 5 | 4 | 4.5 | 4 | 0 | 0 | 0 |
| Co₃O₄ | 1.5 | 1.5 | 1 | 1 | 1 | 0 | 0 | 0 |
| AlF | 1 | 1 | 0.5 | 0 | 0.5 | 0 | 0 | 0 |
| Cu₂O | 6 | 0 | 3 | 4 | 4 | 0 | 0 | 0 |
| MnO₄ | 0 | 6 | 2 | 1 | 2 | 0 | 0 | 0 |
| Bi₂O₃ | 0 | 0 | 2.5 | 0 | 0 | 0 | 0 | 0 |
| V₂O₅ | 0 | 0 | 0 | 0 | 1.5 | 0 | 7 | 15 |
| MoO₃ | 0 | 0 | 0 | 0 | 0.5 | 0 | 3 | 0 |
| Total | 100 | 100 | 100 | 100 | 100 | 100 | 100 | 100 |

### <Preparation of enamel composition samples>

Frits prepared from the enamel compositions according to Examples 1 to 5 and Comparative Examples 1 to 3 were each spray-coated onto a low-carbon steel sheet having dimensions of 200×200 mm and a thickness of 1 mm or less using a corona discharge gun. The discharge gun was operated at a voltage of 40 kV to 100 kV, and the amount of frit sprayed onto the low-carbon steel sheet was 300 g/m². The frit-coated low-carbon steel sheet was fired at 830 to 870 °C for 300 to 450 seconds to form a coating layer on one surface of the low-carbon steel sheet. In this case, the coating layer had a thickness of about 80 µm to 250 µm. Accordingly, samples according to Examples 1 to 5 and Comparative Examples 1 to 3 were prepared.

### <Experimental Example>

Performance evaluations were performed on the samples according to the examples and comparative examples as described below, and the results are shown in Table 5.

### 1. Evaluation of cleaning performance for chicken fat contaminants

One gram of chicken fat as a contaminant was uniformly applied in a thin layer with a brush onto the surface of a sample in which the enamel composition was coated on a metal substrate (100×100 mm), and then the contaminated sample was placed in a temperature-controlled chamber, and the contaminant was fixed at a temperature of 250 to 290 °C for 1 hour. After fixation of the contaminant, the sample was naturally cooled, and the degree of hardening was confirmed, and then the hardened chicken fat was then wiped using a scrubbing pad for frying pans wetted with room-temperature water while applying a force of 3 kgf or less. A flat-bottomed rod having a diameter of 5 cm was used to ensure uniform wiping of the contaminated sample surface.

### 2. Evaluation of cleaning performance for cherry pie contaminants

One gram of cherry pie as a contaminant was uniformly applied in a thin layer with a brush onto the surface of a sample in which the enamel composition was coated on a metal substrate (100×100 mm), and then the contaminated sample was placed in a temperature-controlled chamber, and the contaminant was fixed at a temperature of about 220 °C for 30 minutes. After fixation of the contaminant, the sample was naturally cooled, and the contaminant was burned at 350 °C for 1 hour. Thereafter, the hardened cherry pie contaminant was wiped using a scrubbing pad for frying pans wetted with room-temperature water while applying a force of 3 kgf or less. A flat-bottomed rod having a diameter of 5 cm was used to ensure uniform wiping of the contaminated sample surface.

The number of reciprocating wiping strokes required to clean each sample was measured and defined as the cleaning reciprocation count, and the criteria for evaluating the cleaning performance are shown in Table 3.

**[Table 2]**

| Number of cleaning reciprocations | Level |
|---|---|
| 1 to 5 | LV.5 |
| 6 to 15 | LV.4 |
| 16 to 25 | LV.3 |
| 26 to 50 | LV.2 |
| 51 ~ | LV.1 |

### 3. Durability evaluation

After completion of the cleaning test according to Item 2 above, the samples were evaluated for durability, including heat resistance and chemical resistance. The durability of each sample was evaluated by examining the degree of staining. Specifically, the surface of each sample was examined, and the stain was evaluated by quantifying the area ratio of the residual contaminants or traces remaining on the surface relative to the total surface area. The evaluation criteria for staining are shown in Table 3.

**[Table 3]**

| Stain area ratio | Level |
|---|---|
| 0% | LV.5 |
| ~ 20% | LV.4 |
| ~ 50% | LV.3 |
| ~ 80% | LV.2 |
| 80% ~ | LV.1 |

**[Table 4]**

| | Examples | | | | | Comparative Example | | |
|---|---|---|---|---|---|---|---|---|
| | 1 | 2 | 3 | 4 | 5 | 1 | 2 | 3 |
| Cleaning performance for chicken fat | LV.5 | LV.5 | LV.5 | LV.5 | LV.5 | LV.1 | LV.3 | LV.2 |
| Cleaning performance for cherry pie | LV.5 | LV.5 | LV.5 | LV.5 | LV.5 | LV.1 | LV.3 | LV.1 |
| Stain level | LV.5 | LV.5 | LV.5 | LV.5 | LV.5 | LV.1 | LV2 | LV.2 |

As shown in Table 4, the examples according to the present invention exhibited not only excellent cleaning performance but also excellent durability.

In particular, referring to FIG. 4, it can be seen that the enamel coatings prepared using the enamel compositions according to Examples 1 and 2 of the present invention had all contaminants removed after cleaning. However, the enamel coating according to Comparative Example 1 still retained contaminants after cleaning.

The comparative examples, which did not have the optimized composition of the examples, exhibited degraded cleaning performance and also showed highly unsatisfactory durability due to the unstable glass composition.

Although the present invention has been described above, the present invention is not limited by the embodiments disclosed herein, and it is apparent that various modifications can be made by those skilled in the art within the scope of the technical spirit of the present invention. In addition, even when the operational effects according to the configuration of the present invention have not been explicitly described in the description of the embodiments of the present invention, it goes without saying that the effects predictable by the corresponding configuration should also be recognized.

### [Descriptions of reference numerals]

1: cooking appliance
11: cavity
12: cooking chamber
13: convection assembly
14: door
15: upper heater
16: lower heater
17, 18: coating layers

## Claims

1. An enamel composition comprising:
20 to 30 wt% of P₂O₅;
16 to 23 wt% of SiO₂;
14 to 20 wt% of Al₂O₃;
10 to 16 wt% of B₂O₃;
15 to 30 wt% of one or more selected from the group consisting of Na₂O, K₂O, and Li₂O;
0.5 to 4 wt% of TiO₂;
2 to 8 wt% of Fe₂O₃;
1 to 2 wt% of Co₃O₄; and
0.5 to 8 wt% of MeO.
(where MeO includes one or more selected from the group consisting of Cu₂O, CeO₂, Bi₂O₃, Y₂O₃, La₂O₃, Ta₂O₅, V₂O₅, WO₃, MoO₃, and MnO₄).

2. The enamel composition of claim 1, further comprising 2.5 wt% or less of ZrO₂.

3. The enamel composition of claim 1, further comprising 2 wt% or less of AlF.

4. The enamel composition of claim 1, wherein MeO includes 6 wt% or more of Cu₂O or MnO₄.

5. A preparation method of an enamel composition, comprising:
providing an enamel composition material including 20 to 30 wt% of P₂O₅,
16 to 23 wt% of SiO₂,
14 to 20 wt% of Al₂O₃,
10 to 16 wt% of B₂O₃,
15 to 30 wt% of one or more selected from the group consisting of Na₂O, K₂O, and Li₂O;
0.5 to 4 wt% of TiO₂,
2 to 8 wt% of Fe₂O₃,
1 to 2 wt% of Co₃O₄, and
0.5 to 8 wt% of MeO;
melting the enamel composition material; and
quenching the melted enamel composition material to form an enamel composition.

6. The preparation method of claim 5, wherein the enamel composition material further includes 2.5 wt% or less of ZrO₂.

7. The preparation method of claim 5, wherein the enamel composition material further includes 2 wt% or less of AlF.

8. The preparation method of claim 5, wherein MeO includes 6 wt% or more of Cu₂O or MnO₄.

9. A cooking appliance, comprising:
a cavity in which a cooking chamber is formed;
a door configured to selectively open and close the cooking chamber;
at least one heat source configured to provide heat for heating food in the cooking chamber;
a buffer layer coated on an inner surface of the cavity or an inner surface of the door; and
a coating layer coated on the buffer layer and formed from the enamel composition of any one of claims 1 to 4.
